# EUROPÄISCHE PATENTSCHRIFT

(11) **EP 0 459 005 B1**
(45) Veröffentlichungstag und Bekanntmachung des Hinweises auf die Patenterteilung: **29.03.1995**
(21) Anmeldenummer: 90110485.1
(22) Anmeldetag: 01.06.1990
(51) Int. Cl.: H04J 3/12

(54) **Verfahren und Anordnung zum Übermitteln von Betriebszustandsinformationen zwischen zentralen und dezentralen Einrichtungen eines Kommunikationssystems**
Method and arrangement for the transmission of operational status information between centralised and decentralised devices of a communication system
Méthode et arrangement de transmission d'information de l'état de fonctionnement entre les dispositifs centraux et décentralisés d'un système de communication

(43) Veröffentlichungstag der Anmeldung: 04.12.1991
(73) Patentinhaber: SIEMENS AKTIENGESELLSCHAFT, 80333 München (DE)
(72) Erfinder: Zwack, Eduard, Dipl.-Ing. (FH), D-8039 Puchheim (DE); Strohmeier, Peter, Dipl.-Ing., D-8000 München 70 (DE); Geissler, Friedrich, Dipl.-Ing., D-8190 Wolfratshausen (DE); Heitmann, Jürgen, Dr.-Ing., D-8000 München 71 (DE)

(56) Entgegenhaltungen:
- US-A- 4 731 781
- TELCOM REPORT, 1985, Sonderheft, Seiten 55-66, Berlin, DE; G. BECKINGER et al.:"Hardware-Struktur des HICOM-Kommunikationscomputers"
- IDEM

## Beschreibung

Die Erfindung betrifft ein Verfahren zum Übermitteln von Betriebszustandsinformationen zwischen zentralen und dezentralen, jeweils mit einer Steuereinrichtung ausgestatteten Einrichtungen eines Kommunikationssystems, wobei zwischen den zentralen und dezentralen Einrichtungen zumindest eine Verbindung für einen innerhalb eines Übertragungsrahmen kanalorientierten Kommunikationsaustausch und eine Verbindung für die Übermittlung von den Beginn eines Rahmens durch Taktsignalflanken anzeigenden Rahmentaktsignalen vorgesehen sind.

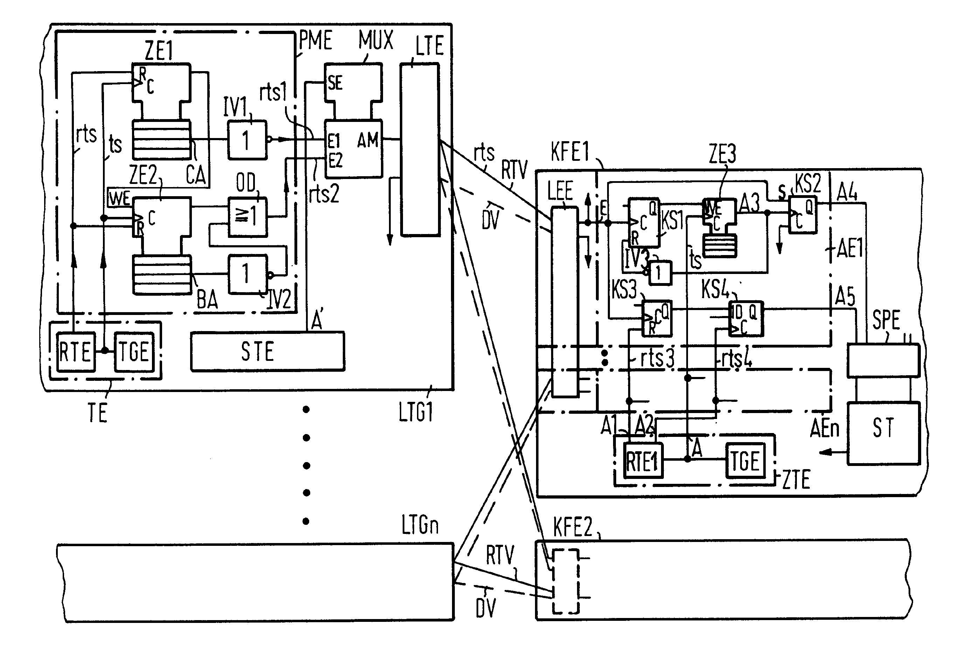

Ein derartiges Kommunikationssystem ist aus der Druckschrift ISDN im Büro - HICOM, Sonderausgabe Telcom report und siemens-magazin COM, 1985 der Siemens AG bekannt. Bei diesem Kommunikationssystem, d. h. der HICOM-Kommunikationsanlage, sind dezentrale Einrichtungen, wie beispielsweise Anschlußeinheiten, über sogenannte 2 MBit/s-Sprach- und Datenmultiplexkanäle mit den zentralen Einrichtungen, wie beispielsweise einem zentralen Koppelnetz, verbunden - siehe Bild 2 und zugehörige Beschreibung auf Seite 59. Die 2 MBit/s-Sprach- bzw. Datenmultiplexkanäle sind hierbei in 30 Nutzkanäle zu je 64 KBit/s und einen Signalisierungskanal von 64 KBit/s unterteilt. Die 64 KBit/s-Nutzkanäle sind für die Übermittlung von pulscodemodulierten Sprachinformationen oder von Dateninformationen vorgesehen. Jeweils 8 Bit des 32 x 64 KBit/s-Kanäle umfassenden 2 MBit/s-Bitstromes sind einem Übertragungsrahmen zugeordnet. Die einen Übertragungsrahmen repräsentierenden Rahmentaktsignale weisen hierbei eine Wiederholfrequenz von 8 KHz auf. Diese Rahmentaktsignale werden bei längeren Übertragungsstrecken mit Hilfe aufwendiger Scrambler-Verfahren und bei den relativ kurzen Verbindungen zwischen den Einrichtungen eines Kommunikationssystems über separat hierfür angeordnete Verbindungen zu den betroffenen Einrichtungen übermittelt. Üblicherweise zeigt die positive Flanke dieser Rahmentaktsignale der die Daten bzw. Datensignale empfangenden Einrichtung den Beginn eines Rahmens bzw. den Beginn des ersten Nutzkanals an.

Des weiteren sind in den jeweiligen Einrichtungen des Kommunikationssystems für die Steuerung der vermittlungstechnischen, betriebstechnischen und sicherungstechnischen Vorgänge in den jeweiligen Einrichtungen Steuereinrichtungen vorgesehen. Diese Steuereinrichtungen kommunizieren über hierfür vorgesehene Signalisierungskanäle, wobei die Informationen durch eine HDLC-Übertragungsprozedur übermittelt werden - siehe Bild 2, Seite 59, der Druckschrift ISDN im Büro, HICOM. Über diese Signalisierungskanäle werden im Rahmen eines betriebstechnischen Informationsaustausches Betriebszustandsinformationen, wie z. B. "Einrichtung ist aktiv oder inaktiv, Einrichtung befindet sich im Stand-by- oder Hot-Stand-by-Betrieb oder Einrichtung ist gestört", übermittelt. Für diese Übermittlung derartiger Betriebszustandsinformationen, insbesondere von dezentralen Einrichtungen zu zentralen Einrichtungen einer Kommunikationsanlage sind aufwendige Signalisierungs- und Übertragungsprogramme erforderlich. Darüberhinaus können diese Betriebszustandsinformationen nur bei ungestörten Übertragungs- bzw. Signalisierungsprogrammen übermittelt werden und stellen darüberhinaus eine zusätzliche Verkehrsbelastung der ohnehin überlasteten Signalisierungskanäle dar.

Aus der US 4 731 781 ist ein Empfänger für eine digitale Kommunikationseinrichtung bekannt, in dem eine Trennung von pulsdauermodulierten von zeitmultiplexorientierten Signalen durchgeführt wird. Die pulsdauermodulierten Signale werden zusammen mit den zeitmultiplexorientierten Signalen übertragen, wodurch eine effizientere Nutzung des Übertragungsweges erreicht wird.

Die der Erfindung zugrundeliegende Aufgabe ist darin zu sehen, das eingangs definierte Kommunikationssystem derart auszugestalten, daß eine möglichst störungssichere Übermittlung der Betriebszustandsinformationen zwischen den Einrichtungen, insbesondere zwischen den dezentralen und den zentralen Einrichtungen - bei minimalem Realisierungsaufwand - erreicht wird. Die Aufgabe wird ausgehend von den Merkmalen der eingangs definierten Kommunikationsanlage gemäß Oberbegriff des Anspruchs 1 durch dessen kennzeichnende Merkmale gelöst.

Der wesentliche Aspekt des erfindungsgemäßen Verfahrens ist darin zu sehen, daß mit den Rahmentaktsignalen die Betriebszustandsinformationen durch Pulsdauer- bzw. Pulspausenmodulation der Rahmentaktsignale übermittelt werden, wodurch eine zusatzliche Belastung der überlasteten Signalisierungskanäle vermieden wird.

Ein wesentlicher Vorteil des erfindungsgemäßen Verfahrens besteht in der Übermittlung von Betriebszustandsinformationen auch bei gestörten sicherheitstechnischen bzw. betriebstechnischen Programmabläufen, wodurch eine sehr zuverlässige Übermittlung der Betriebszustandsinformationen bewirkt wird.

Ein weiterer Vorteil des erfindungsgemäßen Verfahrens ist in der einfachen Realisierung durch übliche integrierte Schaltkreistechnik zu sehen. Die verwendeten Schaltungskomponenten sind darüberhinaus einfach in kundenprogrammierbaren oder kundenspezifizierbaren integrierten Schaltkreisen zu realisieren.

Ist das erfindungsgemäße Verfahren für die Übermittlung mehrerer Betriebszustandsinformationen vorgesehen, so können diese Betriebszustandsinformationen mit Hilfe von mindestens zwei kodierten pulsdauer- oder pulspausenmodulierten Rahmentaktsignalen übermittelt werden - siehe Anspruch 2. Diese Weiterbildung des erfindungsgemäßen Verfahrens ist besonders einfach durch handelsübliche integrierte Kodier- bzw. Dekodier-Schaltkreise realisierbar.

Ein wesentlicher Betriebszustand, nämlich "Einrichtung vorhanden oder nicht vorhanden", wird beim erfindungsgemäßen Verfahren durch Übertragen bzw. Nichtübertragen der Rahmentaktsignale der jeweiligen Einrichtung angezeigt - siehe Anspruch 3.

Um die zentralen Einrichtungen redundant angeordneter zentraler und/oder dezentraler Einrichtungen über die Betriebszustände der dezentralen Einrichtungen zu informieren, wird vorteilhaft jede dezentrale Einrichtung mit jeder zentralen Einrichtung über eine Rahmentaktsignale übermittelnde Verbindung verbunden - siehe Anspruch 5. Hierdurch wird erreicht, daß jede zentrale Einrichtung gleichzeitig über die Betriebszustände der an diese angeschlossenen dezentralen Einrichtungen informiert wird.

In eine Realisierung des erfindungsgemäßen Verfahrens sind grundsätzlich zwei unterschiedliche Anordnungen einzubeziehen. Hierbei ist eine Anordnung in denjenigen Einrichtungen vorgesehen, in denen die jeweiligen Betriebszustände erfaßt und die in dieser Einrichtung gebildeten Rahmentaktsignale je nach Betriebszustand entsprechend dem erfindungsgemäßen Verfahren pulsdauer- oder pulspausenmoduliert werden. Eine weitere, zur ersten grundsätzlich unterschiedliche Anordnung wird in denjenigen Einrichtungen eines Kommunikationssystem realisiert, in denen die übermittelten Rahmentaktsignale empfangen und aus den Pulsdauern bzw. Pulspausen der empfangenen Rahmentaktsignale die Betriebszustände der entfernten Einrichtung ermittelt und anschließend gespeichert werden.

In den Einrichtungen, in denen Betriebszustandsinformationen übermittelnde pulsdauer- bzw. pulspausenmodulierte der Beginn eines Rahmens anzeigende Rahmentaktsignale zu bilden sind, werden die unterschiedlichen Impulsdauern bzw. Impulspausen mit Hilfe einer Pulsmodulationseinrichtung gebildet - siehe Anspruch 6. Dieser Pulsmodulationseinrichtung werden Taktsignale zugeführt, die eine gegenüber der Frequenz der Rahmentaktsignale höhere Frequenz aufweisen. Besonders vorteilhaft werden hierbei die für die Bildung der Datentaktsignale eingesetzten Datenbittaktsignale mitverwendet. In der Pulsmodulationseinrichtung wird für jeden Betriebszustand ein separates Rahmentaktsignal mit einer entsprechenden Pulsdauer bzw. Pulslänge erzeugt. Diese unterschiedlich pulsdauer- bzw. pulspausenmodulierten Rahmentaktsignale werden an eine Multiplexeinrichtung geführt. Die Steuereingänge dieser Multiplexeinrichtung sind mit der Steuereinrichtung der jeweiligen Einrichtung verbunden. Über diese Steuereingänge wird die Multiplexeinrichtung derart gesteuert, daß nur das dem jeweiligen Betriebszustand entsprechende pulsdauer- bzw. pulspausenmodulierte Rahmentaktsignal an den Ausgang der Multiplexeinrichtung gelangt. Besonders vorteilhaft wird die Pulsdauermodulationseinrichtung durch binäre Zähleinrichtungen und an deren binäre Ausgänge angeschlossene logische Verknüpfungsglieder realisiert - siehe Anspruch 7. Hierbei werden die Taktsignale an einen Takteingang der binären Zähleinrichtung gesteuert und in dieser gezählt. Je nach Verknüpfung der binären Ausgänge der Zähleinrichtung werden hierdurch unterschiedliche Pulsdauern bzw. Pulspausen realisiert. Die Zähleinrichtung wird hierbei durch die positiven Flankensignale der Rahmentaktsignale in einen Zählbeginn-Ausgangszustand zurückgesetzt.

In einer Einrichtung des Kommunikationssystems, in der Betriebszustandsinformation übermittelnde pulsdauer- bzw. pulspausenmodulierte, der Beginn eines Rahmens anzeigende Rahmentaktsignale zu erkenne sind, ist eine Auswerteeinrichtung angeordnet, mit der zumindest zwei unterschiedliche Pulspausen zu erkennen sind und/oder das Vorhandensein von Rahmentaktsignalen überprüft wird - siehe Anspruch 9. An den Ausgängen dieser Auswerteeinrichtung sind die Betriebszustände durch unterschiedliche Spannungspotentiale repräsentiert. Diese Spannungspotentiale werden in einer Speichereinrichtung gespeichert. Das Steuern und Auslesen dieser Betriebszustandspotentiale bzw. Betriebszustandsinformationen wird durch eine mit der Speichereinrichtung verbundenen Steuereinrichtung der jeweiligen Einrichtung durchgeführt. Eine besonders vorteilhafte Realisierung einer Auswerteeinrichtung, in der nur zwei unterschiedliche Pulsdauern bzw. Pulspausen zu erkennen und das Vorhandensein von Rahmentaktsignalen zu überprüfen sind, wird durch den Einsatz einer Zähleinrichtung, von vier Kippstufen und eines Invertiergliedes erreicht - siehe Anspruch 10. Mit Hilfe der Zähleinrichtung wird in der Auswerteeinrichtung ein Impuls mit einer Impulsdauer gebildet, die zwischen den zwei Impulsdauern der die Betriebszustände repräsentierenden Rahmentaktsignale liegt. Unterschreitet die Pulsdauer des Rahmentaktsignals die in der Auswerteeinrichtung gebildete, so wird an einen Ausgang der Auswerteeinrichtung ein entsprechendes Spannungspotential gesteuert. Analog hierzu wird bei Unterschreiten der Pulsdauer der Rahmentaktsignale gegenüber den Pulsdauern der intern gebildeten Signale an den Ausgang der Auswerteeinrichtung ein zum vorhergehenden Betriebszustand unterschiedliches Spannungspotential gesteuert. Das Vorhandensein der Rahmentaktsignale wird mit Hilfe zweier Kippstufen überprüft. Da das Vorhandensein der Rahmentaktsignale nur während der Pulsdauern der zugeführten Rahmentaktsignale überprüft werden kann, müssen die den Kippstufen zugeführten Rahmentaktsignale eine niedrigere Frequenz, zumindest die Hälfte, gegenüber der Frequenz der ankommenden Rahmentaktsignale aufweisen.

Nach einer besonders vorteilhaften Ausgestaltung der Erfindung ist der Multiplexeinrichtung eine die Rahmentaktsignale hinsichtlich Spannungspegel und Impulsform für eine Übertragung aufbereitende Leitungstreibereinrichtung nachgeschaltet, wobei der Ausgang der Leitungstreibereinrichtung mit dem die Rahmentaktsignale übermittelnden Übertragungsmedium verbunden ist - siehe Anspruch 8. Analog hierzu ist der Auswerteeinrichtung eine Leitungsempfängereinrichtung vorgeschaltet, in der die ankommenen Rahmentaktsignale regeneriert und in für die Verarbeitung geeignete Spannungspotentiale umgesetzt werden. Der Eingang dieser Leitungsempfängereinrichtung ist mit dem die Rahmentaktsignale übermittelnden Übertragungsmedium verbunden. Mit Hilfe der Leitungstreiber- und Leitungsempfängereinrichtung können die Rahmentaktsignale über größere Entfernungen, maximal circa 300 Meter, übermittelt werden.

Im folgenden wird das erfindungsgemäße Verfahren anhand einer Zeichnung erläutert.

Die Zeichnung zeigt zentrale und dezentrale Einrichtungen eines Kommunikationssystems, insbesondere einer digitalen Kommunikations-Nebenstellenanlage. Dezentrale Einrichtungen einer Kommunikationsanlage sind beispielsweise Leitungsanschlußgruppen LTG1...LTGn, an die unterschiedliche Teilnehmerendeinrichtungen (nicht dargestellt) anschließbar sind. Zentrale Einrichtungen einer Kommunikationsanlage stellen beispielsweise zentrale Koppelfeldeinrichtungen KFE1, KFE2 dar. Aus sicherheitstechnischen Gründen sind diese zentralen Einrichtungen redundant angeordnet. Zwischen jeder Leitungsanschlußgruppe LTG1...LTGn und jeder der beiden Koppelfeldeinrichtungen KFE1, KFE2 ist jeweils eine in Richtung Koppelfeldeinrichtung KFE1, KFE2 wirkende und für den Kommunikationsaustausch vorgesehene Datenverbindung DV - in der Zeichnung durch strichlierte Linien angegeben - und je eine pulsdauer- bzw. pulspausenmodulierte Rahmentaktsignale rts übermittelnde Rahmentaktverbindung RTV vorgesehen. Die in Richtung Leitungsanschlußgruppen LTG1...LTGn wirkenden Daten- und Rahmentaktsignalverbindungen DV, RTV sind nicht dargestellt.

Für das Ausführungsbeispiel sei angenommen, daß von jeder der Leitungsanschlußgruppen LTG1...LTGn zwei Betriebszustände, Aktiv und Inaktiv, und das Vorhandensein der jeweiligen Leitungsanschlußgruppe LTG1...LTGn an die zentralen Koppelfeldeinrichtungen KFE1, KFE2 übermittelt wird. Entsprechend dem erfindungsgemäßen Verfahren werden die beiden Betriebszustände durch unterschiedliche Pulsdauer bzw. Pulspausen aufweisende Rahmentaktsignale rts von einer Leitungsanschlußgruppe LTG1...LTGn an die zentralen Koppelfeldeinrichtungen KFE1, KFE2 übermittelt. In der Zeichnung ist repräsentativ für alle weiteren Leitungsanschlußgruppen LTG1...LTGn eine erfindungsgemäße Anordnung in der ersten Leitungsanschlußgruppe LTG1 dargestellt. In der Leitungsanschlußgruppe LTG1 ist eine Taktgeneratoreinrichtung TGE angeordnet. In dieser Taktgeneratoreinrichtung TGE werden Taktsignale ts mit einer Frequenz gebildet, die der Datenbittaktfrequenz der über die Datenverbindung DV zu übermittelnden Daten entspricht. Bei einer üblichen Übertragungsgeschwindigkeit von 2,048 MBit/s werden in der Taktgeneratoreinrichtung TGE folglich Taktsignale ts mit einer Frequenz von 2,048 MHz gebildet. Diese Taktsignale ts gelangen über eine entsprechende Verbindung an eine Rahmentakteinrichtung RTE. In dieser Rahmentakteinrichtung werden Rahmentaktsignale rts erzeugt. Hierbei zeigt die positive Flanke der Rahmentaktsignale rts den Beginn eines Übertragungsrahmens an. Bei einer Übermittlungsgeschwindigkeit der Daten von 2,048 MBit/s und einer Unterteilung in 32 × 64 KBit/s Sprach- oder Datenkanäle ergibt sich bei einer Zuordnung von 8 Bit je Daten- bzw. Sprachkanal eine Frequenz der Rahmentaktsignale rts von 8 KHz. Die Taktgeneratoreinrichtung TGE und die Rahmentakteinrichtung RTE bilden zusammen die Takteinrichtung TE. Die Rahmentaktsignale rts werden über eine entsprechende Verbindung einem Rücksetzeingang R einer ersten und zweiten binären Zähleinrichtung ZE1, ZE2 zugeführt. Ein Takteingang C der ersten und zweiten binären Zähleinrichtung ZE1, ZE2 ist jeweils mit dem die Taktsignale ts führenden Ausgang der Taktgeneratoreinrichtung TGE verbunden. Für das Ausführungsbeispiel ist eine binäre modulo 16-Zähleinrichtung ZE1, ZE2 vorgesehen. Der Ausgang der ersten binären Zähleinrichtung ZE1 ist mit einem Wirkeingang WE der zweiten binären Zähleinrichtung ZE2 verbunden. Mit Beginn des positiven Flankenwechsels der Rahmentaktsignale rts werden zunächst die am Takteingang C anliegenden Taktsignale ts in der ersten binären Zähleinrichtung ZE1 gezählt. Nach dem sechzehnten in der ersten binären Zähleinrichtung ZE1 durchgeführten Zählvorgang wird über den Ausgang dieser ersten binären Zähleinrichtung ZE1 die zweite binäre Zähleinrichtung ZE2 aktiviert, d. h. das Zählen der Taktsignale ts eingeleitet. An einem 2³ Binärausgang (CA) der ersten binären Zähleinrichtung ZE1 ist ein erster Inverter IV1 angeschlossen. Am Ausgang dieses ersten Inverters IV1 liegen pulspausenmodulierte Rahmentaktsignale rts1 mit einer 2³, d. h. 8 Taktsignaldauern umfassenden Impulsdauer vor. An einem 2²-Binärausgang (AB) der zweiten binären Zähleinrichtung ZE2 ist ein zweiter Inverter IV2 angeschlossen. Sowohl der Ausgang dieses zweiten Inverters IV2 als auch der Ausgang der zweiten binären Zähleinrichtung ZE2 ist auf jeweils einen Eingang eines ODER-Verknüpfungsgliedes OD geführt. Am Ausgang dieses ODER-Verknüpfungsgliedes OD liegen pulsdauermodulierte Rahmentaktsignale rts2 mit einer 20 Taktsignaldauern umfassenden Pulsdauer vor. Der Ausgang des ersten Inverters IV1 ist auf einen ersten Eingang E1 und der Ausgang des ODER-Verknüpfungsgliedes OD auf einen zweiten Eingang E2 einer Multiplexeinrichtung MUX geschaltet. Der Steuereingang SE dieser Multiplexeinrichtung MUX ist mit einem Ausgang A′ einer Steuereinrichtung STE der ersten Leitungsanschlußgruppe LTG1 verbunden. Hierbei ist für das Ausführungsbeispiel angenommen, daß alle Betriebszustände - sowohl programmtechnische als auch schaltungstechnische - an die Steuereinrichtung STE gemeldet werden und von dieser über den Ausgang AM die Multiplexeinrichtung MUX entsprechend den Betriebszuständen beeinflußt wird. Im Ausführungsbeispiel ist beispielsweise der Betriebszustand "Aktiv" den 8 Taktsignaldauern entsprechenden Pulsdauern der Rahmentaktsignale rts1 und der Betriebszustand "Inaktiv" dem 20 Taktsignaldauern entsprechenden Pulsdauern der Rahmentaktsignale rts2 zugeordnet. Folglich werden je nach Betriebszustand die am ersten oder zweiten Eingang E1, E2 der Multiplexeinrichtung MUX anliegenden Rahmentaktsignale rts1, rts2 an dessen Ausgang AM gesteuert. Dieser Ausgang AM ist mit einer Leitungstreibereinrichtung LTE verbunden. In dieser Leitungstreibereinrichtung LTE werden die pulsdauermodulierten Rahmentaktsignale rts1, rts2 hinsichtlich ihrer Impulsform und ihres Spannungspegels für eine Übertragung über die an einem Ausgang der Leitungstreibereinrichtung LTE angeschlossene Rahmentaktverbindung RTV aufbereitet.

Die einzelnen Anordnungskomponenten sind durch integrierte Schaltkreise in Advanced Low-Power Schottky-Technik wie folgt realisierbar: Erste und zweite binäre Zähleinrichtung ZE1, ZE2 durch 74 ALS 163, erster und zweiter Inverter IV1, IV2 durch 74 ALS 04, das ODER-Verknüpfungsglied OD durch 74 ALS 32, die Multiplexeinrichtung MUX durch 74 ALS 257 und die Leitungstreibereinrichtung LTE durch 74 BCT 8374. Bei Verwendung des integrierten Schaltkreises 74 ALS 163 kann anstelle des in der Zeichnung angegebenen Rücksetzeinganges R auch ein Übernahmeeingang für die Rücksetzung benutzt werden. Hierbei wird an eine an den Binäreingängen der integrierten Schaltung anliegende binäre Information bei einem bestimmten Informationszustand an den Übernahmeeingängen an die Binärausgänge der integrierten Schaltung gesteuert. Werden die Binäreingänge mit Low-Potential beschaltet, so entspricht die Übernahme dieser Binärinformation an die Binärausgänge einer Rücksetzung.

In der Zeichnung sind weiterhin die zur Erläuterung des erfindungsgemäßen Verfahrens erforderlichen Anordnungskomponenten der ersten, jedoch ansonsten mit der zweiten gleichartig realisierten Koppelfeldeinrichtung KFE1 dargestellt. Die über die Rahmentaktverbindung RTV übermittelten pulsdauermodulierten Rahmentaktsignale rts1, rts2 gelangen an eine Leitungsempfangseinrichtung LEE. In dieser Leitungsempfangseinrichtung LEE werden die ankommenden pulsdauermodulierten Rahmentaktsignale rts1, rts2 regeneriert und an einen zur weiteren Verarbeitung geeigneten Spannungspegel angepaßt. Die regenerierten pulsdauermodulierten Rahmentaktsignale rts1, rts2 gelangen an einen Eingang E einer ersten Auswerteeinrichtung AE1. Analog hierzu werden die von den verbleibenden Leitungsanschlußgruppen LTG2...LTGn ankommenden pulsdauermodulierten Rahmentaktsignale rts1, rts2 über die Leitungsempfangseinrichtung LEE zu jeweils einer Auswerteeinrichtung AE2...AEn geführt. Die weiteren Auswerteeinrichtungen AE2...AEn sind gleichartig aufgebaut und daher in der Zeichnung nicht im Detail angegeben. Der Eingang E der ersten Auswerteeinrichtung AE1 ist auf einen Takteingang C einer ersten Kippstufe KS1, auf einen Setzeingang S einer zweiten Kippstufe KS2 und auf einen Takteingang C einer dritten Kippstufe KS3 geführt. Der Ausgang Q der ersten Kippstufe KS1 ist mit einem Wirkeingang WE einer dritten binären Zähleinrichtung ZE3 verbunden. Diese dritte binäre Zähleinrichtung ZE3 stellt analog zur ersten und zweiten Zähleinrichtung ZE1, ZE2 eine binäre modulo 16-Zähleinrichtung ZE3 dar. An den Takteingang C dieser dritten binären Zähleinrichtung ZE3 gelangen über eine entsprechende Verbindung Taktsignale ts. Diese Taktsignale ts werden in einer, gleichartig wie in den Leitungsanschlußgruppen LTG realisierten Taktgeneratoreinrichtung TGE gebildet und weisen ebenfalls eine Frequenz von 2,048 MBit/s auf. Der Ausgang A3 der binären dritten Zähleinrichtung ZE3 ist mit einem Takteingang C der zweiten Kippstufe KS2 und über ein drittes Invertierglied IV3 auf einen Rücksetzeingang R der ersten Kippstufe KS1 geführt. Der Ausgang Q der zweiten Kippstufe KS2 ist mit einem ersten Ausgang A4 der ersten Auswerteeinrichtung AE1 verbunden. An diesem ersten Ausgang A4 liegt, je nach Pulsdauer der übermittelten Rahmentaktsignale rts1, rts2, High- oder Low-Potential an. Die zur Ermittlung der Pulsdauern der Rahmentaktsignale rts1, rts2 erforderliche Bezugspulsdauer wird mit Hilfe der dritten binären Zähleinrichtung ZE3 gebildet. Im Sinne des Feststellens der Pulsdauer der übermittelten pulsdauermodulierten Rahmentaktsignale rts1, rts2 wird nach 16 Zahlschritten durch die am Ausgang A3 der dritten binären Zähleinrichtung ZE3 auftretende positive Signalflanke bei Rahmentaktsignalen rts1 mit kürzerer Pulsdauer das am Setzeingang S anliegende Low-Potential an den Ausgang Q der zweiten Kippstufe KS2 und bei 16 Pulsdauern überschreitenden pulsdauermodulierten Rahmentaktsignalen rts2 das am Setzeingang S anliegende positive Potential an den Ausgang Q der zweiten Kippstufe KS2 gesteuert.

Der Ausgang Q der dritten Kippstufe KS3 ist mit einem D-Eingang 10 der vierten Kippstufe KS4 verbunden. Der Ausgang dieser vierten Kippstufe KS4 repräsentiert den zweiten Ausgang A5 der ersten Auswerteeinrichtung AE1. Ein Rücksetzeingang R der dritten Kippstufe KS3 ist auf einen ersten Ausgang A1 einer ersten Rahmentakteinrichtung RTE1 geführt. Ein zweiter Ausgang A2 dieser Rahmentakteinrichtung RTE1 ist auf einen Takteingang C der vierten Kippstufe KS4 geschaltet. Des weiteren werden die in der Taktgeneratoreinrichtung TGE erzeugten Taktsignale ts an die weitere Rahmentakteinrichtung RTE1 gesteuert. In dieser weiteren Rahmentakteinrichtung RTE1 werden weitere Rahmentaktsignale rts3, rts4 gebildet, die gegenüber der Frequenz der in den Leitungsanschlußgruppen LTG1...LTGn gebildeten pulsdauermodulierten Rahmentaktsignalen rts1, rts2 zumindest die halbe Frequenz aufweisen. Die Taktgeneratoreinrichtung TGE und die weitere Rahmentakteinrichtung RTE1 bilden zusammen eine zentrale Takteinrichtung ZTE. Des weiteren weist das am zweiten Ausgang A2 vorliegende weitere Rahmentaktsignal rts4 eine vorgegebene zeitliche Verzögerung gegenüber dem am ersten Ausgang A1 anliegenden weiteren Rahmentaktsignal rts3 auf. Durch die Halbierung der Frequenz der in der weiteren Rahmentakteinrichtung RTE1 gebildeten Rahmentaktsignale rts3, rts4 wird erreicht, daß das Vorhandensein von den Leitungsanschlußgruppen LTG1...LTGn übermittelten Rahmentaktsignale rts1, rts2 innerhalb einer Pulsdauer der in der weiteren Rahmentakteinrichtung RTE1 gebildeten weiteren Rahmentaktsignale rts3, rts4 festgestellt wird. Die am Ausgang Q der dritten Kippstufe KS3 vorliegende Information wird zeitlich versetzt an den Ausgang Q der vierten Kippstufe KS4 übernommen. Mit Hilfe der dritten und vierten Kippstufe KS3, KS4 wird das Vorhandensein von pulsdauermodulierten Rahmentaktsignalen rts1, rts2 und damit das Vorhandensein der jeweiligen Leitungsanschlußgruppen LTG1...LTGn festgestellt. Hierbei zeigt positives Spannungspotential am zweiten Ausgang A5 der Auswerteeinrichtung AE1 das Vorhandensein der jeweiligen Leitungsanschlußgruppe LTG1 an. Sowohl der erste als auch der zweite Ausgang A4, A5 der ersten Auswerteeinrichtung AE1 sind jeweils auf einen Eingang einer Speichereinrichtung SPE geführt. Diese ist wiederum mit einer Steuereinrichtung ZST verbunden. Sowohl das Einspeichern der Betriebszustandsinformationen als auch das Lesen dieser Informationen wird durch die Steuereinrichtung ZST bewerkstelligt. Die Ausgänge der Speichereinrichtung SPE können über geeignete logische Verknüpfungsglieder derart miteinander verknüpft werden, daß nur eine einzige Verbindung zur Steuereinrichtung ZST geführt wird. Mit Hilfe dieser einzigen Verbindung wird angezeigt, ob alle angeschlossenen Leitungsanschlußgruppen sich im "Aktiv"- oder eine bzw. mehrere Leitungsanschlußgruppen LTG sich im "Inaktiv"-Zustand befinden.

Die Komponenten der ersten Auswerteeinrichtung AE1 sowie die Speichereinrichtung SPE können analog zu den Komponenten der Leitungsanschlußgruppen LTG1...LTGn durch integrierte Schaltkreise in Advanced Low-Power Schottky-Technik wie folgt realisiert werden: Dritte Zähleinrichtung ZE3 durch 74 ALS 163, erste bis vierte Kippstufe KS1...KS4 durch 74 ALS 74, drittes Invertierglied IV3 durch 74 ALS O4 und die Speichereinrichtung SPE durch 74 BCT 8374.

## Patentansprüche

1. Verfahren zum Übermitteln von Betriebszustandsinformationen zwischen zentralen und dezentralen, jeweils mit einer Steuereinrichtung (ST, STE) ausgestatteten Einrichtungen (LTG1... LTGn, KFE1, KFE2) eines Kommunikationssystems, wobei zwischen den zentralen und dezentralen Einrichtungen (LTG1...LTGn, KFE1, KFE2) zumindest eine Verbindung (DV) für einen innerhalb eines Übertragungsrahmens kanalorientierten Kommunikationsaustausch und eine Verbindung (RTV) für die Übermittlung von den Beginn eines Rahmens durch Taktsignalflanken anzeigenden Rahmentaktsignalen (rts) vorgesehen sind,
**dadurch gekennzeichnet**,
daß die Betriebszustandsinformationen durch pulsdauer- oder pulspausenmodulierte, den Beginn eines Rahmens anzeigende Rahmentaktsignale (rts1, rts2) übermittelt werden.

2. Verfahren nach Anspruch 1,
**dadurch gekennzeichnet,**
daß die Betriebszustandsinformationen durch mindestens zwei kodierte pulsdauer- oder pulspausenmodulierte Rahmentaktsignale (rts1, rts2) übermittelt werden.

3. Verfahren nach einem der vorhergehenden Ansprüche,
**dadurch gekennzeichnet**,
daß das Vorhandensein bzw. Nichtvorhandensein der jeweiligen Einrichtungen (LTG1...LTGn, KFE1, KFE2) durch Übertragen bzw. Nichtübertragen von pulsdauer- oder pulspausenmodulierten Rahmentaktsignalen (rts1, rts2) angezeigt wird.

4. Verfahren nach einem der vorhergehenden Ansprüche,
**dadurch gekennzeichnet,**
daß die zentralen und/oder dezentralen Einrichtungen (LTG1..LTGn, KFE1, KFE2) redundant angeordnet sind, wobei jede dezentrale Einrichtung (LTG1...LTGn) mit jeder zentralen Einrichtung (KFE1, KFE2) über eine pulsdauer- oder pulspausenmodulierte Rahmentaktsignale (rts1, rts2) übermittelnde Verbindung (RTV) verbunden ist.

5. Verfahren nach einem der vorhergehenden Ansprüche,
**dadurch gekennzeichnet,**
daß durch die Betriebszustandsinformationen Aktiv- oder Inaktiv-Betriebszustände von Einrichtungen (LTG1...LTGn, KFE1, KFE2) Stand-by- oder Hot-Stand-by-Betriebszustände jeweiliger Ersatzeinrichtung oder ein Störbetriebszustand und/oder detaillierte Störbetriebszustände der jeweiligen Einrichtung (LTG1...LTGn, KFE1, KFE2) angezeigt werden.

6. Anordnung zum Übermitteln von Betriebszustandsinformationen zwischen zentralen und dezentralen, jeweils mit einer Steuereinrichtung (ST, STE) ausgestatteten Einrichtungen (LTG1...LTGn, KFE1, KFE2) eines Kommunikationssystems, wobei zwischen den zentralen und dezentralen Einrichtungen (LTG1...LTGn, KFE1, KFE2) zumindest eine Verbindung (DV) für einen innerhalb eines Übertragungsrahmens kanalorientierten Kommunikationsaustausch und eine Verbindung (RTV) für die Übermittlung von den Beginn eines Rahmens durch Taktsignalflanken anzeigenden Rahmentaktsignalen vorgesehen sind,
**dadurch gekennzeichnet,**
daß in den Einrichtungen (LTG1...LTGn) des Kommunikationssystems, in denen Betriebszustandsinformationen übermittelnde pulsdauer- bzw. pulspausenmodulierte, der Beginn eines Rahmens anzeigende Rahmentaktsignale (rts1, rts2) zu bilden sind, eine Rahmentaktsignale (rts) und eine gegenüber der Frequenz der Rahmentaktsignale (rts) höhere Frequenz aufweisende Taktsignale (ts) erzeugende Takteinrichtung (TE) angeordnet ist, daß der die Rahmentaktsignale (rts) führende Ausgang und der die Taktsignale (ts) führende Ausgang der Takteinrichtung (TE) mit jeweils einer zumindest zwei pulspausen- bzw. pulsdauermodulierte Rahmentaktsignale (rts1, rts2) bildende Pulsmodulationseinrichtung (PME) verbunden ist, daß die die unterschiedlichen Pulsdauern bzw. Pulspausen aufweisenden Rahmentaktsignale (rts1, rts2) führenden Ausgänge der Pulsmodulationseinrichtung (PME) jeweils mit einem Eingang (E1, E2) einer Multiplexeinrichtung (MUX) verbunden sind, daß zumindest ein Steuereingang (SE) der Multiplexeinrichtung (MUX) auf zumindest einen unterschiedliche Betriebszustände anzeigenden Ausgang (A′) einer Steuereinrichtung (STE) der jeweiligen Einrichtung (LTG1...LTGn) geführt ist, wobei am Ausgang der Multiplexeinrichtung (MUX) pulsdauer- bzw. pulspausenmodulierte Rahmentaktsignale (rts1, rts2) zur Verfügung stehen, deren Impulsdauer bzw. Impulspause jeweils den aktuellen Betriebszustand der jeweiligen Einrichtung (LTG1... LTGn) repräsentieren.

7. Anordnung nach Anspruch 6,
**dadurch gekennzeichnet,**
daß in einer zwei unterschiedlich pulsdauermodulierte Rahmentaktsignale (rts1, rts2) bildenden Pulsmodulationseinrichtung (PME) der die Rahmentaktsignale (rts) führende Eingang bzw. der die Taktsignale (ts) führende Eingang jeweils mit einem Rücksetzeingang (R) bzw. mit einem Takteingang (C) einer ersten und zweiten binären Zähleinrichtung (ZE1, ZE2) verbunden ist, daß die die binären Zwischenzählergebnisse führenden Binärausgänge (CA, BA) der binären Zähleinrichtungen (ZE1, ZE2) mit die vorgegebenen Pulsdauern bildenden logischen Verknüpfungsglieder (IV1, IV2, OD) beschaltet sind, daß die unterschiedlich impulsdauermodulierten Rahmentaktsignale (rts1, rts2) führenden Ausgänge der Verknüpfungsglieder (IV1, OD) die Ausgänge der Pulsmodulationseinrichtung (PME) darstellen.

8. Anordnung nach einem der Ansprüche 6 oder 7,
**dadurch gekennzeichnet,**
daß der Ausgang der Multiplexeinrichtung (MUX) mit einer die pulspausen bzw. pulsdauermodulierten Rahmentaktsignale (rts1, rts2) hinsichtlich Spannungspegel und Impulsform für eine Übertragung aufbereitenden Leitungstreibereinrichtung (LTE) verbunden ist und daß der Ausgang dieser Leitungstreibereinrichtung (LTE) mit einem die Übermittlung der pulsdauer- bzw. pulspausenmodulierten Rahmentaktsignale (rts1, rts2) durchzuführenden Übertragungsmedium (RTV) verbunden ist.

9. Anordnung zum Übermitteln von Betriebszustandsinformationen zwischen zentralen und dezentralen, jeweils mit einer Steuereinrichtung (ST, STE) ausgestatteten Einrichtungen (LTG1...LTGn, KFE1, KFE2) eines Kommunikationssystems, wobei zwischen den zentralen und dezentralen Einrichtungen (LTG1...LTGn, KFE1, KFE2) zumindest eine Verbindung (DV) für einen innerhalb eines Übertragungsrahmens kanalorientierten Kommunikationsaustausch und eine Verbindung (RTV) für die Übermittlung von den den Beginn eines Rahmens durch Taktsignalflanken anzeigenden Rahmentaktsignalen vorgesehen sind,
**dadurch gekennzeichnet,**
daß in den Einrichtung (KFE1, KFE2) des Kommunikationssystems, in denen Betriebszustandsinformationen übermittelnde pulsdauer- bzw. pulspausenmodulierte, der Beginn eines Rahmens anzeigende Rahmentaktsignale (rts1, rts2) zu erkennen sind, zumindest eine zwei unterschiedliche Pulspausen bzw. Pulsdauern oder mindestens zwei kodierte Impulspausen bzw. Impulsdauern erkennende und/oder das Vorhandensein von Rahmentaktsignalen (rts1, rts2) überprüfende Auswerteeinrichtung (AE1′...AEn) zumindest für eine weitere, an diese Einrichtung (KFE1, KFE2) angeschlossene Einrichtung (LTG1...LTGn) angeordnet ist, daß jede Auswerteeinrichtung (AE1...AEn) mit einem Ausgang (A) einer gegenüber der Frequenz der pulspausen- bzw. pulsdauermodulierten Rahmentaktsignale (rts1, rts2) eine höhere Frequenz aufweisenden Taktsignale (ts) und mit weiteren Ausgängen (A1, A2) einer aus den Taktsignalen abgeleitete weitere Rahmentaktsignale (rts3) und phasenversetzten Rahmentaktsignale (rts4) bildenden Zentraltakteinrichtung (ZTE) verbunden ist, daß die Betriebszustandsinformationen entsprechendes Spannungspotential aufweisenden Ausgänge (A4, A5) der Auswerteeinrichtungen (AE1...AEn) mit einer die Betriebszustandsinformationen speichernden Speichereinrichtung (SPE) verbunden sind, wobei das Speichern und Auslesen der Betriebszustandsinformationen durch eine mit der Speichereinrichtung (SPE) entsprechend verbundenen zentrale Steuerung (ST) der jeweiligen Einrichtung (KFE1, KFE2) gesteuert wird.

10. Anordnung nach Anspruch 8,
**dadurch gekennzeichnet,**
daß bei einer zwei unterschiedliche Pulsdauern bzw. Pulspausen erkennenden und das Vorhandensein von pulsdauer- bzw. pulspausenmodulierten Rahmentaktsignalen (rts1, rts2) überprüfenden Auswerteeinrichtung (AE1) der Eingang (E) der Auswerteeinrichtung (AE1) auf einen Takteingang (C) einer ersten Kippstufe (KS1), auf einen Setzeingang (S) einer zweiten Kippstufe (KS2) und auf einen Takteingang (C) einer dritten Kippstufe (KS3) geführt ist, daß der Ausgang (Q) der ersten Kippstufe (KS1) auf einen Wirkeingang (WE) einer dritten binären Zähleinrichtung (ZE3) geführt ist, daß an einen Takteingang (C) der dritten binären Zähleinrichtung (ZE3) die Taktsignale (ts) geführt werden, daß der Ausgang der dritten Zähleinrichtung sowohl mit einem Takteingang (C) der zweiten Kippstufe (KS2) als auch über ein drittes Invertierglied (IV3) mit einem Rücksetzeingang (R) der ersten Kippstufe (KS1) verbunden ist, daß der Ausgang (Q) der zweiten Kippstufe (KS2) den dei Betriebszustände repräsentierenden Ausgang (A4) der Auswerteeinrichtung (AE1) darstellt, daß der Rücksetzeingang (R) der dritten Kippstufe (KS3) mit einem die weiteren Rahmentaktsignale (rts3) führenden Ausgang (A1) der Zentraltakteinrichtung (ZTE) verbunden ist, daß ein Takteingang (C) einer vierten Kippstufe (KS4) mit einem weiteren die phasenversetzten Rahmentaktsignale (rts4) führenden Ausgang (A2) der Zentraltakteinrichtung (ZTE) verbunden ist, daß der Ausgang (Q) der dritten Kippstufe (KS3) mit einem D-Eingang (1D) der vierten Kippstufe (KS4) verbunden ist, daß der Ausgang (Q) der vierten Kippstufe (KS4) den das Vorhandensein der Rahmentaktsignale (rts1, rts2) repräsentierenden Ausgang (A5) der Auswerteeinrichtung (AE1...AEn) darstellt.

11. Anordnung nach einem der Ansprüche 8 oder 9,
**dadurch gekennzeichnet,**
daß der Eingang (E) einer Auswerteeinrichtung (AE1) mit einem Ausgang einer die Spannungspotentiale umsetzenden und die Impulsform regenerierenden Leitungsempfangseinrichtung (LEE) verbunden ist und daß der Eingang dieser Leitungsempfangseinrichtung (LEE) zu einem die pulsdauer- bzw. pulspausenmodulierten Rahmentaktsignale (rts1, rts2) übermittelnden Übertragungsmedium (RTV) geführt ist.

## Claims

1. Method for transmitting operational status information between central and decentralized devices (LTG1.. .LTGn, KFE1, KFE2) of a communication system which are each equipped with a control device (ST, STE), in which at least one connection (DV) for a channel-oriented communication exchange within a transmission frame and one connection (RTV) for the transmission of frame clock signals (rts) indicating the beginning of a frame by means of clock signal edges are provided between the central and decentralized devices (LTG1...LTGn, KFE1, KFE2), characterized in that the operational status information is transmitted by means of pulse duration-modulated or pulse pause-modulated frame clock signals (rts1, rts2) that indicate the beginning of a frame.

2. Method according to Claim 1, characterized in that the operational status information is transmitted by means of at least two coded pulse duration-modulated or pulse pause-modulated frame clock signals (rts1, rts2).

3. Method according to one of the preceding claims, characterized in that the presence or absence of the respective devices (LTG1...LTGn, KFE1, KFE2) is indicated by transmitting or not transmitting, respectively, pulse duration-modulated or pulse pause-modulated frame clock signals (rts1, rts2).

4. Method according to one of the preceding claims, characterized in that the central and/or decentralized devices (LTG1...LTGn, KFE1, KFE2) are arranged in a redundant fashion, in which each decentralized device (LTG1...LTGn) is connected to each central device (KFE1, KFE2) via a connection (RTV) that transmits pulse duration-modulated or pulse pause-modulated frame clock signals (rts1, rts2).

5. Method according to one of the preceding claims, characterized in that active or inactive operational statuses of devices (LTG1...LTGn, KFE1, KFE2), standby or hot standby operational statuses of the respective standby device or a malfunction operational status and/or detailed malfunction operational statuses of the respective device (LTG1...LTGn, KFE1, KFE2) are indicated by the operational status information.

6. Arrangement for transmitting operational status information between central and decentralized devices (LTG1...LTGn, KFE1, KFE2) of a communication system which are each equipped with a control device (ST, STE), in which at least one connection (DV) for a channel-oriented communication exchange within a transmission frame and one connection (RTV) for the transmission of frame clock signals indicating the beginning of a frame by means of clock signal edges are provided between the central and decentralized devices (LTG1...LTGn, KFE1, KFE2), characterized in that a clock means (TE) that generates frame clock signals (rts) and clock signals (ts) having a higher frequency than the frequency of the frame clock signals (rts) is arranged in the devices (LTG1...LTGn) of the communication system in which pulse duration-modulated or pulse pause-modulated frame clock signals (rts1, rts2) that indicate the beginning of a frame and transmit operational status information are to be formed, in that the output carrying the frame clock signals (rts) and the output carrying the clock signals (ts) of the clock means (TE) are connected in each case to a pulse modulation device (PME) forming at least two pulse pause-modulated or pulse duration-modulated frame clock signals (rts1, rts2), in that the outputs of the pulse modulation device (PME) carrying the frame clock signals (rts1, rts2) having different pulse durations or pulse pauses respectively are connected in each case to one input (E1, E2) of a multiplexer (MUX), in that at least one control input (SE) of the multiplexer (MUX) is connected to at least one output (A′), indicating different operational statuses, of a control device (STE) of the respective device (LTG1...LTGn), pulse duration-modulated or pulse pause-modulated frame clock signals (rts1, rts2) being available at the output of the multiplexer (MUX), the pulse duration or pulse pause respectively of which signals represents the current operational status of the respective device (LTG1...LTGn).

7. Arrangement according to Claim 6, characterized in that in a pulse modulation device (PME) forming two different pulse duration-modulated frame clock signals (rts1, rts2), the input carrying the frame clock signals (rts) or the input carrying the clock signals (ts) respectively is connected in each case to a reset input (R) or to a clock input (C) of a first and second binary counter (ZE1, ZE2), in that the binary outputs (CA, BA) of the binary counters (ZE1, ZE2) carrying the binary interim counting results are connected to logic gates (IV1, IV2, OD) forming the predetermined pulse durations, in that the outputs of the gates (IV1, OD) carrying the differently pulse duration-modulated frame clock signals (rts1, rts2) constitute the outputs of the pulse modulation device (PME).

8. Arrangement according to one of Claims 6 or 7, characterized in that the output of the multiplexer (MUX) is connected to a line driver device (LTE) which conditions the pulse pause-modulated or pulse duration-modulated frame clock signals (rts1, rts2) with respect to voltage level and pulse shape for a transmission, and in that the output of said line driver device (LTE) is connected to a transmission medium (RTV) which carries out the transmission of the pulse duration-modulated or pulse pause-modulated frame clock signals (rts1, rts2).

9. Arrangement for transmitting operational status information between central and decentralized devices (LTG1...LTGn, KFE1, KFE2) of a communication system which are each equipped with a control device (ST, STE), in which at least one connection (DV) for a channel-oriented communication exchange within a transmission frame and one connection (RTV) for the transmission of frame clock signals indicating the beginning of a frame by means of clock signal edges are provided between the central and decentralized devices (LTG1...LTGn, KFE1, KFE2), characterized in that in the devices (KFE1, KFE2) of the communication system in which pulse duration-modulated or pulse pause-modulated frame clock signals (rts1, rts2) that indicate the beginning of a frame and transmit operational status information can be detected, at least one evaluation device (AE1′...AEn) that detects two different pulse pauses or pulse durations or at least two coded pulse pauses or pulse durations and/or checks for the presence of frame clock signals (rts1, rts2) is arranged at least for one further device (LTG1...LTGn) connected to said device (KFE1, KFE2), in that each evaluation device (AE1...AEn) is connected to an output (A) of a central clock means (ZTE) which forms clock signals (ts) that have a higher frequency than the frequency of the pulse pause-modulated or pulse duration-modulated frame clock signals (rts1, rts2) and to further outputs (A1, A2) of a central clock means (ZTE) which forms further frame clock signals (rts3) and phase-offset frame clock signals (rts4) derived from the clock signals, in that the outputs (A4, A5) of the evaluation devices (AE1...AEn) having a voltage potential corresponding to operational status information are connected to a storage means (SPE) that stores the operational status information, the storage and retrieval of the operational status information being controlled by a central controller (ST) of the respective device (KFE1, KFE2) connected accordingly to the storage means (SPE).

10. Arrangement according to Claim 8, characterized in that in the case of an evaluation device (AE1) that detects two different pulse durations or pulse pauses and checks for the presence of pulse duration-modulated or pulse pause-modulated frame clock signals (rts1, rts2), the input (E) of the evaluation device (AE1) is connected to a clock input (C) of a first trigger circuit (KS1), to a set input (S) of a second trigger circuit (KS2) and to a clock input (C) of a third trigger circuit (KS3), in that the output (Q) of the first trigger circuit (KS1) is connected to an active input (WE) of a third binary counter (ZE3), in that the clock signals (ts) are fed to a clock input (C) of the third binary counter (ZE3), in that the output of the third counter is connected both to a clock input (C) of the second trigger circuit (KS2) and to a reset input (R) of the first trigger circuit (KS1) via a third inverter element (IV3), in that the output (Q) of the second trigger circuit (KS2) constitutes the output (A4) of the evaluation device (AE1) representing the operational statuses, in that the reset input (R) of the third trigger circuit (KS3) is connected to an output (A1) of the central clock means (ZTE) carrying the further frame clock signals (rts3), in that a clock input (C) of a fourth trigger circuit (KS4) is connected to a further output (A2) of the central clock means (ZTE) carrying the phase-offset frame clock signals (rts4), in that the output (Q) of the third trigger circuit (KS3) is connected to a D-input (1D) of the fourth trigger circuit (KS4), in that the output (Q) of the fourth trigger circuit (KS4) constitutes the output (A5) of the evaluation device (AE1...AEn) representing the presence of the frame clock signals (rts1, rts2).

11. Arrangement according to one of Claims 8 or 9, characterized in that the input (E) of an evaluation device (AE1) is connected to an output of a line receiver (LEE) that converts the voltage potentials and regenerates the pulse shape, and in that the input of said line receiver (LEE) is connected to a transmission medium (RTV) that transmits the pulse duration-modulated or pulse pause-modulated frame clock signals (rts1, rts2).

## Revendications

1. Procédé pour transmettre des informations d'état de fonctionnement entre des dispositifs centraux et décentralisés (LTG1...LTGn, KFE1, KFE2), qui Sont équipés chacun d'un dispositif de commande (ST, STE), d'un système de communication, selon lequel entre les dispositifs centraux et décentralisés (LTG1...LTGn, KFE1, KFE2) sont prévues au moins une liaison (DV) pour un échange de communications basées sur des canaux à l'intérieur d'une trame de transmission, et une liaison (RTV) pour la retransmission de signaux de cadence de trame (rts), qui indiquent le début d'une trame au moyen de francs de signaux de cadence, caractérisé par le fait que les informations d'état de fonctionnement sont transmises par des signaux de cadence de trame (rts1, rts2) qui sont modulés selon une modulation d'impulsions en durée, selon une modulation des pauses entre impulsions et indiquent le début d'une trame.

2. Procédé suivant la revendication 1, caractérisé par le fait que les informations d'état de fonctionnement sont transmises par au moins deux signaux codés de cadence de trame (rts1,rts2), qui sont modulés selon une modulation d'impulsions en durée ou selon une modulation des pauses entre impulsions.

3. Procédé suivant l'une des revendications précédentes, caractérisé par le fait que la présence ou l'absence des dispositifs respectifs (LTG1...LTGn, KFE1, KFE2) est indiquée au moyen de la transmission ou de l'absence de transmission de signaux de cadence de trame (rts1, rts2) modulés selon une modulation d'impulsions en durée ou modulés selon une modulation des pauses entre impulsions.

4. Procédé suivant l'une des revendications précédentes, caractérisé par le fait que les dispositifs centraux et/ou décentralisés (LTG1...LTGn, KFE1, KFE2) sont prévus de façon redondante, chaque dispositif décentralisé (LTG1...LTGn) étant relié à chaque dispositif central (KFE1, KFE2) par l'intermédiaire d'une liaison (RTV) qui transmet des signaux de cadence de trame (RTSA, RTSB), selon une modulation d'impulsions en durée ou selon une modulation des pauses entre impulsions.

5. Procédé suivant l'une des revendications précédentes, caractérisé par le fait que des états de fonctionnement Stand-by ou Hot-Stand-by d'un dispositif de remplacement respectif ou un état de fonctionnement perturbé et/ou des états détaillés de fonctionnement perturbé du dispositif respectif (LTG1...LTGn, KFE1, KFE2), sont affichés au moyen des informations concernant les états de fonctionnement actifs ou inactifs de dispositifs (LTG1...LTGn; KFE1, KFE2).

6. Dispositif pour retransmettre des informations d'états de fonctionnement entre les dispositifs centraux et décentralisés (LTG1...LTGn, KFE1, KFE2) d'un réseau de communication, équipés respectivement d'un dispositif de commande (ST,STE), du type dans lequel, entre les dispositifs centraux et décentralisés (LTG1...LTGn, KFE1, KFE2) sont prévues au moins une liaison (DV) pour un échange de communications basées sur des canaux à l'intérieur d'une trame de transmission, alors qu'une liaison (RTV) pour la retransmission de signaux de cadence de trame indiquant le début d'une trame au moyen de flancs de signaux de cadence, caractérisé par le fait que dans les dispositifs (LTG1...LTGn) du système de communication, dans lesquels des signaux de cadence de trame (rts1,rts2), qui transmettent des informations d'états de fonctionnement et sont modulés selon une modulation d'impulsions en durée ou selon une modulation des pauses entre impulsions et indiquent le début d'une trame, doivent être formés, est prévu un dispositif de cadence (TE), qui produit des signaux de cadence de trame (rts), et qui produit des signaux de cadence (ts) possédant une fréquence supérieure à la fréquence des signaux de cadence de trame (rts), que la sortie qui délivre les signaux de cadence de trame (rts) et la sortie qui délivre les signaux de cadence (ts) du dispositif de cadence (TE), sont reliées respectivement à un dispositif de modulation d'impulsions (PME), qui forme au moins deux signaux de cadence de trame (rts1, rts2) modulés selon une modulation des pauses entre impulsions ou selon une modulation d'impulsions en durée, que les sorties du dispositif à modulation d'impulsions (PME), qui délivrent les signaux de cadence de trame (rts1,rts2) possédant des durées d'impulsions différentes ou des pauses différentes entre impulsions, sont reliées respectivement à une entrée (E1,E2) d'un dispositif de multiplexage (MUX), qu'au moins une entrée de commande (SE) du dispositif de multiplexage (MUX) est raccordée à au moins une sortie (A′), qui indique différents états de fonctionnement, d'un dispositif de commande (STE), du dispositif respectif (LTG1...LTGn), des signaux de cadence de trame (rts1,rts2), qui sont modulés selon une modulation d'impulsions en durée ou selon une modulation des pauses entre impulsions et dont la durée des impulsions ou la pause entre les impulsions représente respectivement l'état de fonctionnement actuel du dispositif respectif (LTG1...LTGn), sont disponibles à la sortie du dispositif de multiplexage (MUX).

7. Dispositif suivant la revendication 6, caractérisé par le fait que dans un dispositif de modulation d'impulsions (PME) qui forme deux signaux de cadence de trame (rts1,rts2) modulés différemment selon une modulation d'impulsions en durée, l'entrée, qui transmet les signaux de cadence de trame (rts) ou l'entrée, qui transmet les signaux de cadence (ts), est reliée respectivement à une entrée de remise à zéro (R) ou une entrée de cadence (C) de premier et second dispositifs de comptage binaire (ZE1,ZE2), les sorties binaires (CA,BA), qui transmettent les résultats intermédiaires de comptage binaire, des dispositifs de comptage binaire (ZE1,ZE2), sont connectées à des circuits logiques combinatoires (IV1,1V2,OD), qui forment les durées prédéterminées d'impulsions, et que les sorties des circuits combinatoires (IV1,OD), qui délivrent des signaux de cadence de trame (rts1,rts2) modulés différemment selon une modulation d'impulsions en durée, représentent les sorties du dispositif de modulation (PME).

8. Dispositif suivant l'une des revendications 6 ou 7, caractérisé par le fait que la sortie du dispositif de multiplexage (MUX) est reliée à un dispositif formant étage d'attaque de ligne (LTE), qui prépare les signaux de cadence de trame (rts1,rts2) modulés selon une modulation des pauses entre impulsions ou selon une modulation d'impulsions en durée, en rapport avec le niveau de tension et la forme des impulsions pour une transmission, et que la sortie de ce dispositif formant étage d'attaque de ligne (LTE) est reliée à un milieu de transmission (RTV), qui doit exécuter la retransmission des signaux de cadence de trame (rts1,rts2), qui sont modulés selon une modulation d'impulsions en durée ou sont modulés selon une modulation des pauses entre impulsions.

9. Dispositif pour la retransmission des informations d'états de fonctionnement entre les dispositifs centraux et décentralisés (LTG1...LTGn, KFE1, KFE2) d'un réseau de communication, pourvus respectivement d'un dispositif de commande (ST,STE), entre les dispositifs centraux et décentralisés (LTG1...LTGn, KFE1, KFE2) sont prévus au moins une liaison (DV) pour un échange de communications basées sur des canaux à l'intérieur d'une trame de transmission, et une liaison (RTV) pour la retransmission de signaux de cadence de trame indiquant le début d'une trame au moyen de flancs de signaux de cadence, caractérisé par le fait que dans les dispositifs (KFE1,KFE2) du système de communication, dans lesquels des signaux de cadence de trame (rts1,rts2), qui transmettent des informations d'états de fonctionnement et qui sont modulés selon une modulation d'impulsions en durée ou selon une modulation des pauses entre impulsions et indiquent le début d'une trame, doivent être identifiés, il est prévu au moins un dispositif d'évaluation (AE1′...AEn), qui identifie deux pauses différentes entre impulsions ou deux durées du flanc d'impulsions ou au moins deux pauses codées entre impulsions ou deux durées codées d'impulsions et/ou contrôle la présence de signaux de cadence de trame (rts1,rts2), au moins pour un autre dispositif (LTG1...LTGn), qui est raccordé à ce dispositif (KFE1,KFE2), que chaque dispositif d'évaluation (AE1...AEn) est relié à une sortie (A) d'un dispositif central de cadence (TE), qui forme des signaux de cadence (ts), qui possèdent une fréquence supérieure à la fréquence des signaux de cadence de trame (rts1,rts2) modulés selon une modulation des pauses entre impulsions ou selon une modulation d'impulsions en durée, et est relié, à d'autres sorties (A1,A2) de ce dispositif central de cadence (ZTE) qui forme d'autres signaux de cadence de trame (rts3) dérivés des signaux de cadence et d'autres signaux de cadence de trame déphasés (rts4), que les sorties (A4,A5) des dispositifs d'évaluation (AE1...AEn), qui possèdent un potentiel de tension correspondant à des informations d'états de service, des dispositifs d'évaluation (AE1...AEn) sont reliées à un dispositif de mémoire (SPE), qui mémorise les informations d'états de service, la mémorisation et la lecture des informations d'états de service étant commandées par une unité de commande centrale (ST), qui est reliée de façon correspondante au dispositif de mémoire (SPE), du dispositif respectif (KFE1,KFE2).

10. Dispositif suivant la revendication 8, caractérisé par le fait que dans le cas d'un dispositif d'évaluation (AE1), qui identifie deux durées différentes d'impulsions ou deux pauses différentes entre impulsions et contrôle la présence de signaux de cadence de trame (rts1, rts2) modulés selon une modulation d'impulsions en durée ou selon une modulation des pauses entre impulsions, I'entrée (E) du dispositif d'évaluation (AE) est raccordée à une entrée de cadence (C) d'un premier étage à bascule (KS1), et une entrée de positionnement (S) d'un second étage à bascule (KS2) à une entrée de cadence (C) d'un troisième étage à bascule (KS3), que la sortie (Q) du premier étage à bascule (KS1) est raccordée à une entrée active (WE) d'un troisième dispositif de comptage binaire (ZE3), les signaux de cadence (ts) sont envoyés à une entrée de cadence (C) du troisième dispositif de comptage binaire (ZE3), que la sortie du troisième dispositif de comptage est reliée aussi bien à une entrée de cadence (C) du second étage à bascule (KS2) que, par l'intermédiaire d'un troisième circuit inverseur (IV3), à une entrée de remise à l'état initial (R) du premier étage à bascule (KS1), que la sortie (Q) du second étage à bascule (KS2) représente la sortie (A4), qui représente les états de fonctionnement, du dispositif d'évaluation (AE1), que l'entrée de remise à l'état initial (R) du troisième étage à bascule (KS3) est reliée à une sortie (A1), qui transmet les autres signaux de cadence de trame (rts3), du dispositif central de cadence (ZTE), une entrée de cadence (C) d'un quatrième étage à bascule (KS4) est reliée à une autre sortie (A2), qui transmet des signaux de cadence de trame déphasés (rts4), du dispositif central de cadence (ZTE), que la sortie (Q) du troisième étage à bascule (KS3) est reliée à une entrée D (D) du quatrième étage à bascule (KS4), que la sortie (Q) du quatrième étage à bascule (KS4) représente la sortie (A5), qui indique la présence des signaux de cadence de trame (rts1, rts2), du dispositif d'évaluation (AE1...AEn).

11. Dispositif suivant l'une des revendications 8 ou 9, caractérisé par le fait que l'entrée (E) d'un dispositif d'évaluation (AE1) est reliée à une sortie d'un dispositif de réception de ligne (LEE), qui convertit les potentiels de tension et régénère la forme des impulsions, et que l'entrée de ce dispositif de réception de ligne (LEE) est reliée à un milieu de transmission (RTV), qui retransmet les signaux de cadence de trame (rts1,rts2) modulés selon une modulation d'impulsions en durée ou selon une modulation des pauses entre impulsions.
